# EUROPEAN PATENT APPLICATION

(11) **EP 3 392 458 A1**
(43) Date of publication of application: **24.10.2018**
(21) Application number: 18167833.5
(22) Date of filing: 17.04.2018
(51) Int. Cl.: F01D 5/08

(54) **TURBINE WITH UPSTREAM FACING TANGENTIAL ONBOARD INJECTOR FOR**

(30) Priority: 18.04.2017 US 201715490299
(71) Applicant: United Technologies Corporation, Farmington, CT 06032 (US)
(72) Inventor: DEVORE, Matthew A., Rocky Hill, CT Connecticut 06067 (US); ORTIZ, Jonathan, Torrance, CA California 92243 (US)
(74) Representative: Dehns

(57) **Abstract**

Turbines comprising a first stator section having a plurality of first vanes (408'; 508'; 608'), a first rotating section having a plurality of first blades (410'; 510'; 610'), a second stator section having a plurality of second vanes (408"; 508"; 608"), a "primary TOBI assembly" (416; 516; 616) having an "aft-facing, forward-positioned TOBI" (418; 518; 618) configured to direct an airflow (438; 538; 638) from the first stator section in an aftward direction toward the first rotating section, the primary TOBI assembly (416; 516; 616) supplying high pressure cooling flow to leading edges of the first blades (410'; 510'; 610') of the first rotating section, and a "secondary TOBI assembly" (428; 528; 628) having a "forward-facing, aft-positioned TOBI" (430; 530; 630) configured to direct an airflow (440; 540; 640a) from the second stator section in a forward direction toward the first rotating section, the secondary TOBI assembly (428; 528; 628) supplying low pressure cooling flow (440; 540; 640a) to non-leading edge portions of the first blades (410'; 510'; 610') of the first rotating section.

## Description

### BACKGROUND

The subject matter disclosed herein generally relates to cooling flow in gas turbine engines and, more particularly, to forward facing tangential onboard injectors.

In gas turbine engines, tangential onboard injectors (TOBI) are used to direct cooling air toward a rotating disc that supports a plurality of turbine blades. The TOBI is configured to swirl secondary flow cooling air in a direction that is parallel to or along a direction of rotation of the rotating disc. Because of this, leakage flow into a primary or main gaspath that flows through the turbine section will be substantially parallel. That is, TOBI cooling air that leaks from the cooling areas below the gaspath are inserted into the gaspath in the same swirl direction as the rotating rotor.

Because the TOBI is located forward of or in front of the rotating disc, in an axial direction of a gas turbine engine, a vane in the gaspath will turn (swirl) the gaspath air in the same direction of the rotating rotor. Likewise, the leakage air in front of the blade that is swirled by the TOBI, enters the gaspath in the same tangential flow direction. So when the two flows (gaspath and leakage) mix with each other at the inner diameter of the gaspath, both flows are swirling in the same direction.

However, it may be advantageous to control the mixing flow of TOBI leakage flow, particularly as various new engine configurations are designed.

### SUMMARY

According to some embodiments, turbines are provided having a first stator section having a plurality of first vanes, a first rotating section having a plurality of first blades, the first rotating section being axially adjacent and aft of the first stator section along an axis of the turbine, a second stator section having a plurality of second vanes being axially adjacent the first rotating section and aft of the first rotating section along the axis of the turbine, a primary tangential onboard injector assembly ("primary TOBI assembly") having an aft-facing, forward-positioned tangential onboard injector ("aft-facing, forward-positioned TOBI") located radially inward from the first vanes of the first stator section and configured to direct an airflow from the first stator section in an aftward direction toward the first rotating section, the primary TOBI assembly supplying high pressure cooling flow to leading edges of the first blades of the first rotating section, and a secondary tangential onboard injector assembly ("secondary TOBI assembly") having a forward-facing, aft-positioned tangential onboard injector ("forward-facing, aft-positioned TOBI") located radially inward from the second vanes of the second stator section and configured to direct an airflow from the second stator section in a forward direction toward the first rotating section, the secondary TOBI assembly supplying low pressure cooling flow to non-leading edge portions of the first blades of the first rotating section.

In addition to one or more of the features described herein, or as an alternative, further embodiments of the turbines may include a second rotating section having a plurality of second blades, the second rotating section being axially adjacent and aft of the second stator section along the axis of the turbine, wherein the secondary TOBI assembly includes an aft-facing, forward-positioned TOBI located radially inward from the second vanes of the second stator section and configured to direct an airflow from the second stator section in an aftward direction toward the second rotating section, the secondary TOBI assembly supplying low pressure cooling flow to leading and non-leading edge portions of the second blades of the second rotating section.

In addition to one or more of the features described herein, or as an alternative, further embodiments of the turbines may include that the secondary TOBI assembly includes a secondary TOBI divider to separate the low pressure cooling flow into a first TOBI assembly cavity and a second TOBI assembly cavity, wherein flow from the first TOBI assembly cavity passes through the forward-facing, aft-positioned TOBI and flow from the second TOBI assembly cavity passes through the aft-facing, forward-positioned TOBI.

In addition to one or more of the features described herein, or as an alternative, further embodiments of the turbines may include a high pressure source fluidly connected to the primary TOBI assembly, and a low pressure source fluidly connected to the secondary TOBI assembly.

In addition to one or more of the features described herein, or as an alternative, further embodiments of the turbines may include that the high pressure source is a cavity surrounding a combustion chamber of the gas turbine engine.

In addition to one or more of the features described herein, or as an alternative, further embodiments of the turbines may include that the low pressure source is a compressor section of the gas turbine engine.

In addition to one or more of the features described herein, or as an alternative, further embodiments of the turbines may include that fluid from the low pressure source passes through at least one of the plurality of first vanes of the first stator section to reach the secondary TOBI assembly.

In addition to one or more of the features described herein, or as an alternative, further embodiments of the turbines may include that the first rotating section includes a first disc and the first blades rotate on the disc, wherein a portion of the first disc receives at least a portion of the high pressure cooling flow from the primary TOBI assembly and at least a portion of the low pressure cooling flow from the secondary TOBI assembly.

In addition to one or more of the features described herein, or as an alternative, further embodiments of the turbines may include that the first disc includes a flow divider to prevent mixing of the high pressure cooling flow and the low pressure cooling flow prior to entering the first blades.

Accordingly to some embodiments, gas turbine engines having a turbine are provided. The gas turbine engine includes a first stator section having a plurality of first vanes, a first rotating section having a plurality of first blades, the first rotating section being axially adjacent and aft of the first stator section along an axis of the turbine, a second stator section having a plurality of second vanes being axially adjacent the first rotating section and aft of the first rotating section along the axis of the turbine, a primary tangential onboard injector assembly ("primary TOBI assembly") having an aft-facing, forward-positioned tangential onboard injector ("aft-facing, forward-positioned TOBI") located radially inward from the first vanes of the first stator section and configured to direct an airflow from the first stator section in an aftward direction toward the first rotating section, the primary TOBI assembly supplying high pressure cooling flow to leading edges of the first blades of the first rotating section, and a secondary tangential onboard injector assembly ("secondary TOBI assembly") having a forward-facing, aft-positioned tangential onboard injector ("forward-facing, aft-positioned TOBI") located radially inward from the second vanes of the second stator section and configured to direct an airflow from the second stator section in a forward direction toward the first rotating section, the secondary TOBI assembly supplying low pressure cooling flow to non-leading edge portions of the first blades of the first rotating section.

In addition to one or more of the features described herein, or as an alternative, further embodiments of the gas turbine engines may include a second rotating section having a plurality of second blades, the second rotating section being axially adjacent and aft of the second stator section along the axis of the turbine, wherein the secondary TOBI assembly includes an aft-facing, forward-positioned TOBI located radially inward from the second vanes of the second stator section and configured to direct an airflow from the second stator section in an aftward direction toward the second rotating section, the secondary TOBI assembly supplying low pressure cooling flow to leading and non-leading edge portions of the second blades of the second rotating section.

In addition to one or more of the features described herein, or as an alternative, further embodiments of the gas turbine engines may include that the secondary TOBI assembly includes a secondary TOBI divider to separate the low pressure cooling flow into a first TOBI assembly cavity and a second TOBI assembly cavity, wherein flow from the first TOBI assembly cavity passes through the forward-facing, aft-positioned TOBI and flow from the second TOBI assembly cavity passes through the aft-facing, forward-positioned TOBI.

In addition to one or more of the features described herein, or as an alternative, further embodiments of the gas turbine engines may include a high pressure source fluidly connected to the primary TOBI assembly and a low pressure source fluidly connected to the secondary TOBI assembly.

In addition to one or more of the features described herein, or as an alternative, further embodiments of the gas turbine engines may include that the high pressure source is a cavity surrounding a combustion chamber of the gas turbine engine.

In addition to one or more of the features described herein, or as an alternative, further embodiments of the gas turbine engines may include that the low pressure source is a compressor section of the gas turbine engine.

In addition to one or more of the features described herein, or as an alternative, further embodiments of the gas turbine engines may include that fluid from the low pressure source passes through at least one of the plurality of first vanes of the first stator section to reach the secondary TOBI assembly.

In addition to one or more of the features described herein, or as an alternative, further embodiments of the gas turbine engines may include that the first rotating section includes a first disc and the first blades rotate on the disc, wherein a portion of the first disc receives at least a portion of the high pressure cooling flow from the primary TOBI assembly and at least a portion of the low pressure cooling flow from the secondary TOBI assembly.

In addition to one or more of the features described herein, or as an alternative, further embodiments of the gas turbine engines may include that the first disc includes a flow divider to prevent mixing of the high pressure cooling flow and the low pressure cooling flow prior to entering the first blades.

According to some embodiments, gas turbine engines having turbines having a rotating section having a plurality of blades rotatable on a disc, a stator section having a plurality of vanes being axially adjacent the rotating section and aft of the rotating section along an axis of the gas turbine engine, and a forward-facing, aft-positioned tangential onboard injector ("forward-facing, aft-positioned TOBI") located radially inward from the vanes of the stator section and configured to direct an airflow from the stator section in a forward direction toward the rotating section, the forward-facing, aft-positioned TOBI supplying low pressure cooling flow to non-leading edge portions of the blades of the rotating section are provided.

Technical effects of embodiments of the present disclosure include gas turbine engines having turbine sections with forward facing tangential onboard injectors (TOBI) that are positioned aft of a rotating disc to be cooled by air from the TOBI. Further technical effects include turbine sections having primary and secondary TOBI arrangements to provide flow direction control to avoid losses in air flow within the turbine section of gas turbine engines.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1A is a schematic cross-sectional view of a gas turbine engine that may employ various embodiments disclosed herein;
FIG. 1B is a partial schematic view of a turbine section of the gas turbine engine of FIG. 1A;
FIG. 2 is a side schematic illustration showing a vane, a blade, and an aft-facing, forward-located TOBI in accordance with traditional engine configurations;
FIG. 3 is a side schematic illustration showing a vane, a blade, and an forward-facing, aft-located TOBI in accordance with an embodiment of the present disclosure;
FIG. 4A is a schematic illustration of a gas turbine engine having primary and secondary TOBI assemblies in accordance with an embodiment of the present disclosure;
FIG. 4B is a schematic illustration of the gas turbine engine of FIG. 4A illustrating a cooling flow therein;
FIG. 5 is a schematic illustration of a turbine section having TOBI assemblies in accordance with an embodiment of the present disclosure;
FIG. 6A is a schematic illustration of a turbine section having TOBI assemblies in accordance with another embodiment of the present disclosure; and
FIG. 6B is a schematic cross-sectional illustration of a vane shown in FIG. 6A as viewed along the line 6B-6B.

### DETAILED DESCRIPTION

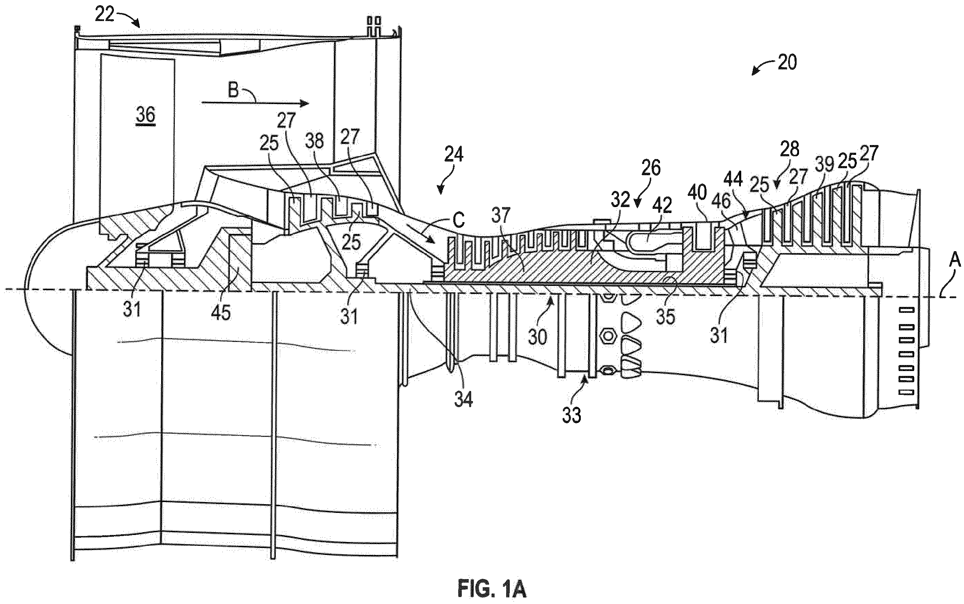

FIG. 1A schematically illustrates a gas turbine engine 20. The exemplary gas turbine engine 20 is a two-spool turbofan engine that generally incorporates a fan section 22, a compressor section 24, a combustor section 26, and a turbine section 28. Alternative engines might include an augmenter section (not shown) among other systems for features. The fan section 22 drives air along a bypass flow path B, while the compressor section 24 drives air along a core flow path C (also referred to as "gaspath C") for compression and communication into the combustor section 26. Hot combustion gases generated in the combustor section 26 are expanded through the turbine section 28. Although depicted as a turbofan gas turbine engine in the disclosed non-limiting embodiment, it should be understood that the concepts described herein are not limited to turbofan engines and these teachings could extend to other types of engines, including but not limited to, single-spool, three-spool, etc. engine architectures.

The gas turbine engine 20 generally includes a low speed spool 30 and a high speed spool 32 mounted for rotation about an engine centerline longitudinal axis A. The low speed spool 30 and the high speed spool 32 may be mounted relative to an engine static structure 33 via several bearing systems 31. It should be understood that other bearing systems 31 may alternatively or additionally be provided.

The low speed spool 30 generally includes an inner shaft 34 that interconnects a fan 36, a low pressure compressor 38 and a low pressure turbine 39. The inner shaft 34 can be connected to the fan 36 through a geared architecture 45 to drive the fan 36 at a lower speed than the low speed spool 30. The high speed spool 32 includes an outer shaft 35 that interconnects a high pressure compressor 37 and a high pressure turbine 40. In this embodiment, the inner shaft 34 and the outer shaft 35 are supported at various axial locations by bearing systems 31 positioned within the engine static structure 33.

A combustor 42 is arranged between the high pressure compressor 37 and the high pressure turbine 40. A mid-turbine frame 44 may be arranged generally between the high pressure turbine 40 and the low pressure turbine 39. The mid-turbine frame 44 can support one or more bearing systems 31 of the turbine section 28. The mid-turbine frame 44 may include one or more airfoils 46 that extend within the core flow path C.

The inner shaft 34 and the outer shaft 35 are concentric and rotate via the bearing systems 31 about the engine centerline longitudinal axis A, which is co-linear with their longitudinal axes. The core airflow is compressed by the low pressure compressor 38 and the high pressure compressor 37, is mixed with fuel and burned in the combustor 42, and is then expanded through the high pressure turbine 40 and the low pressure turbine 39. The high pressure turbine 40 and the low pressure turbine 39 rotationally drive the respective high speed spool 32 and the low speed spool 30 in response to the expansion.

The pressure ratio of the low pressure turbine 39 can be pressure measured prior to the inlet of the low pressure turbine 39 as related to the pressure at the outlet of the low pressure turbine 39 and prior to an exhaust nozzle of the gas turbine engine 20. In one non-limiting embodiment, the bypass ratio of the gas turbine engine 20 is greater than about ten (10:1), the fan diameter is significantly larger than that of the low pressure compressor 38, and the low pressure turbine 39 has a pressure ratio that is greater than about five (5:1). It should be understood, however, that the above parameters are only examples of one embodiment of a geared architecture engine and that the present disclosure is applicable to other gas turbine engines, including direct drive turbofans.

In this embodiment of the example gas turbine engine 20, a significant amount of thrust is provided by the bypass flow path B due to the high bypass ratio. The fan section 22 of the gas turbine engine 20 is designed for a particular flight condition-typically cruise at about 0.8 Mach and about 35,000 feet. This flight condition, with the gas turbine engine 20 at its best fuel consumption, is also known as bucket cruise Thrust Specific Fuel Consumption (TSFC). TSFC is an industry standard parameter of fuel consumption per unit of thrust.

Fan Pressure Ratio is the pressure ratio across a blade of the fan section 22 without the use of a Fan Exit Guide Vane system. The low Fan Pressure Ratio according to one non-limiting embodiment of the example gas turbine engine 20 is less than 1.45. Low Corrected Fan Tip Speed is the actual fan tip speed divided by an industry standard temperature correction of [(Tᵣₐₘ °R)/(518.7 °R)]^{0.5}, where T represents the ambient temperature in degrees Rankine. The Low Corrected Fan Tip Speed according to one non-limiting embodiment of the example gas turbine engine 20 is less than about 1150 fps (351 m/s).

Each of the compressor section 24 and the turbine section 28 may include alternating rows of rotor assemblies and vane assemblies (shown schematically) that carry airfoils that extend into the core flow path C. For example, the rotor assemblies can carry a plurality of rotating blades 25, while each vane assembly can carry a plurality of vanes 27 that extend into the core flow path C. The blades 25 of the rotor assemblies create or extract energy (in the form of pressure) from the core airflow that is communicated through the gas turbine engine 20 along the core flow path C. The vanes 27 of the vane assemblies direct the core airflow to the blades 25 to either add or extract energy.

Various components of a gas turbine engine 20, including but not limited to the airfoils of the blades 25 and the vanes 27 of the compressor section 24 and the turbine section 28, may be subjected to repetitive thermal cycling under widely ranging temperatures and pressures. The hardware of the turbine section 28 is particularly subjected to relatively extreme operating conditions. Therefore, some components may require internal cooling circuits for cooling the parts during engine operation. Example cooling circuits that include features such as partial cavity baffles are discussed below.

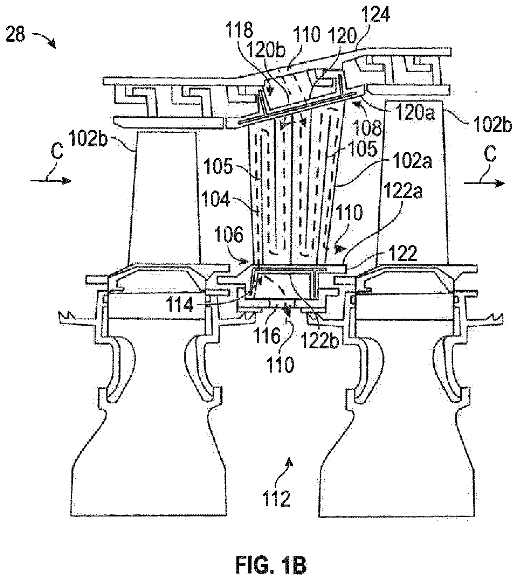

FIG. 1B is a partial schematic view of the turbine section 28 of the gas turbine engine 20 shown in FIG. 1A. Turbine section 28 includes one or more airfoils 102a, 102b. As shown, some airfoils 102a are stationary stator vanes and other airfoils 102b are blades on rotating discs. The stator vanes 102a are part of a stator section or portion of the turbine section 28. The stator section includes the stator vanes 102a that are configured to be stationary within the turbine section 28 and to direct air that flows between the blades 102b. The stator section can include platforms, hooks, flow surfaces, cooling circuits, on-board injectors, seals, and other components as known in the art. The blades 102b are fixed to, mounted to, and/or integrally part of rotating turbine discs that rotatably drive a shaft of the gas turbine engine and form a rotating section of the turbine section 28.

The airfoils 102a, 102b are hollow body airfoils with one or more internal cavities defining a number of cooling channels 104 (schematically shown in vane 102a). The airfoil cavities 104 are formed within the airfoils 102a, 102b and extend from an inner diameter 106 to an outer diameter 108, or vice-versa. The airfoil cavities 104, as shown in the vane 102a, are separated by partitions 105 that extend either from the inner diameter 106 or the outer diameter 108 of the vane 102a. The partitions 105, as shown, extend for a portion of the length of the vane 102a to form a serpentine passage within the vane 102a. As such, the partitions 105 may stop or end prior to forming a complete wall within the vane 102a. Thus, each of the airfoil cavities 104 may be fluidly connected. In other configurations, the partitions 105 can extend the full length of the respective airfoil. Although not shown, those of skill in the art will appreciate that the blades 102b can include similar cooling passages formed by partitions therein.

As shown, counting from a leading edge on the left, the vane 102a may include six airfoil cavities 104 within the hollow body: a first airfoil cavity on the far left followed by a second airfoil cavity immediately to the right of the first airfoil cavity and fluidly connected thereto, and so on. Those of skill in the art will appreciate that the partitions 105 that separate and define the airfoil cavities 104 are not usually visible and FIG. 1B is merely presented for illustrative and explanatory purposes.

The airfoil cavities 104 are configured for cooling airflow to pass through portions of the vane 102a and thus cool the vane 102a. For example, as shown in FIG. 1B, a cooling airflow path 110 is indicated by a dashed line. In the configuration of FIG. 1B, air flows from outer diameter cavity 118. The air then flows through the airfoil cavities 104 as indicated by the cooling airflow path 110. Air is also passed into an airfoil inner diameter cavity 114, through an orifice 116, to rotor cavity 112.

As shown in FIG. 1B, the vane 102a includes an outer diameter platform 120 and an inner diameter platform 122. The vane platforms 120, 122 are configured to enable attachment within and to the gas turbine engine. For example, as appreciated by those of skill in the art, the inner diameter platform 122 can be mounted between adjacent rotor discs and the outer diameter platform 120 can be mounted to a case 124 of the gas turbine engine. As shown, the outer diameter cavity 118 is formed between the case 124 and the outer diameter platform 120. Those of skill in the art will appreciate that the outer diameter cavity 118 and the inner diameter cavity 114 are outside of or separate from the core flow path C. The cavities 114, 118 are separated from the core flow path C by the platforms 120, 122. Thus, each platform 120, 122 includes a respective core gas path surface 120a, 122a and a non-gas path surface 120b, 122b. The body of the vane 102a extends from and between the gas path surfaces 120a, 122a of the respective platforms 120, 122. In some embodiments, the platforms 120, 122 and the body of the vane 102a are a unitary body.

Air is passed through the airfoil cavities of the airfoils to provide cooling airflow to prevent overheating of the airfoils and/or other components or parts of the gas turbine engine. The cooling air for the blade 102b can be supplied from a tangential on-board injector ("TOBI") attached to the vane 102a via path 110, through orifice 116. As will be appreciated by those of skill in the art, a TOBI typically injects air from forward of a rotor, e.g., from proximate the combustor section forward of the turbine section. The TOBI can be configured to swirl secondary flow cooling air in the direction of the rotating direction of the rotor being cooled. Because of this, inner diameter rim cavity leakage that can result from TOBI air is also inserted into the gaspath C at the same swirl direction as the rotating rotor (e.g., on the left side of FIG. 1B).

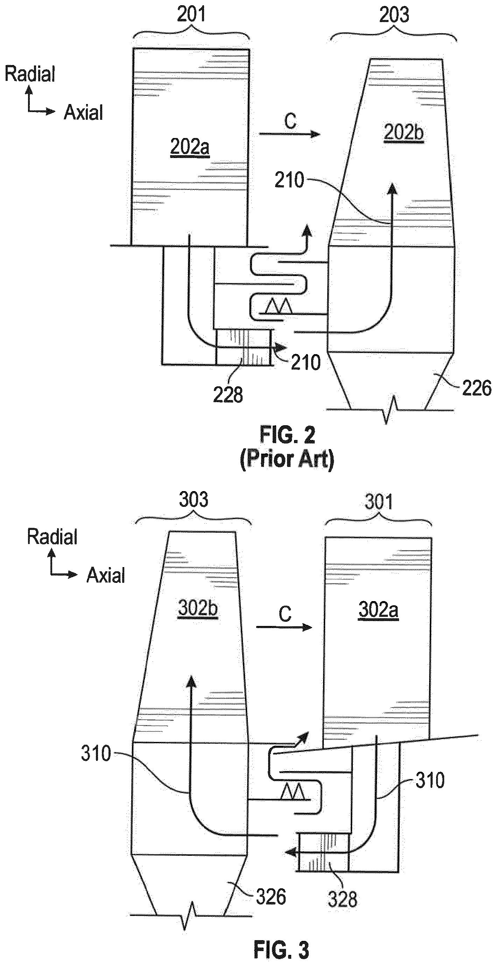

For example, turning to FIG. 2, a schematic illustration of a forward positioned TOBI and associated airflow is shown. FIG. 2 is a side schematic illustration showing a vane 202a of a stator section 201 and a blade 202b of a rotating section 203 of a turbine of a gas turbine engine. As shown, the stator section 201 is forward of the rotating section 203, and thus the blade 202b is aft of the vane 202a. An aft-facing, forward-positioned TOBI 228 is positioned axially forward of the disc 226 to direct a cooling airflow 210 toward the disc 226 and blade 202b.

Cooling flow to the blade 202b is supplied from a pressure source location that meets pressure requirements of the blade leading edge. Such pressure requirements may limit the source of cooling air (e.g., based on pressure/temperature). For example, a bleed source from a high pressure compressor of the gas turbine engine can be used to supply the cooling flow. The cooling flow bleed source is then used to cool all segments of the blade, including the leading edge, the internal pressure side, the internal suction side, and the trailing edge of the blade, as known in the art. That is, the cooling flow is supplied through the TOBI 228 and into and around the blade 202b, as shown by the cooling airflow 210.

However, the majority of the blade 202b does not need to be cooled from an air source with the same pressure/temperature requirements of the leading edge. For example, the trailing edge and the aft portions of the pressure side and suction sides can be cooled using a lower pressure air source. Selecting a lower pressure/temperature air source can provide a benefit both to engine cycle and to turbine airfoil durability. For example, in accordance with embodiments of the present disclosure, gas turbine engines can be configured with the TOBI located behind or aft (and forward facing) of the rotor disc that enables a different source of cooling flow from a source for the leading edge of the airfoil.

For example, as shown in FIG. 3, a schematic illustration of an aft positioned TOBI and associated airflow is shown. FIG. 3 is a side schematic illustration showing a vane 302a of a stator section 301 and a blade 302b of a rotating section 303 of a turbine of a gas turbine engine. The stator section 301 is aft of the rotating section 303, and thus the blade 302b is forward of the vane 302a. The blade 302b rotates on a rotor disc 326 in a rotational direction. As shown, an aft-positioned, forward-facing TOBI 328 is positioned aft of the disc 326 and a cooling airflow 310 passes therethrough to provide cooling air to the disc 326 and the blade 302b.

In such an embodiment, an aft-facing, forward-positioned TOBI can be provided for airfoil leading edge cooling, similar to that shown in FIG. 2. That is, in such an embodiment, a blade leading edge cooling flow is provided from an aft-facing, forward-positioned TOBI supplying high pressure air in accordance with requirements of the leading edge of the blade 302b. However, the trailing edge of the blade 302b can be fed by the aft-positioned, forward-facing TOBI 328 that provides forward-facing flow to the trailing edge of the blade 302b. In such configurations, the second TOBI (e.g., aft-positioned, forward-facing TOBI 328) can be configured to supply cooling for to a second blade (e.g., a rotor positioned after of the vane 302a), such as providing cooling flow to the entire second blade (e.g., leading edge, trailing edge, etc.). The aft-located TOBI can receive a cooling flow supply from a lower pressure source. For example, a lower pressure source can be routed from a mid-stage of the compressor via external pipes and through internal passage(s) in the vane 302a. The aft-positioned, forward-facing TOBI can supply the pressure, flow, and rotation per minute factor ("RPMF") required for the trailing edge and/or other non-leading edge surfaces of the blade 302b.

The aft-positioned, forward-facing TOBI 328 can be part of an aft-positioned TOBI assembly, as described herein. In such embodiments, the aft-positioned TOBI assembly can include a first TOBI and a second TOBI, wherein the first TOBI is aft-positioned, forward-facing relative to a first rotor (having blades), and the second TOBI is forward-positioned, aft-facing relative to a second rotor (having blades).

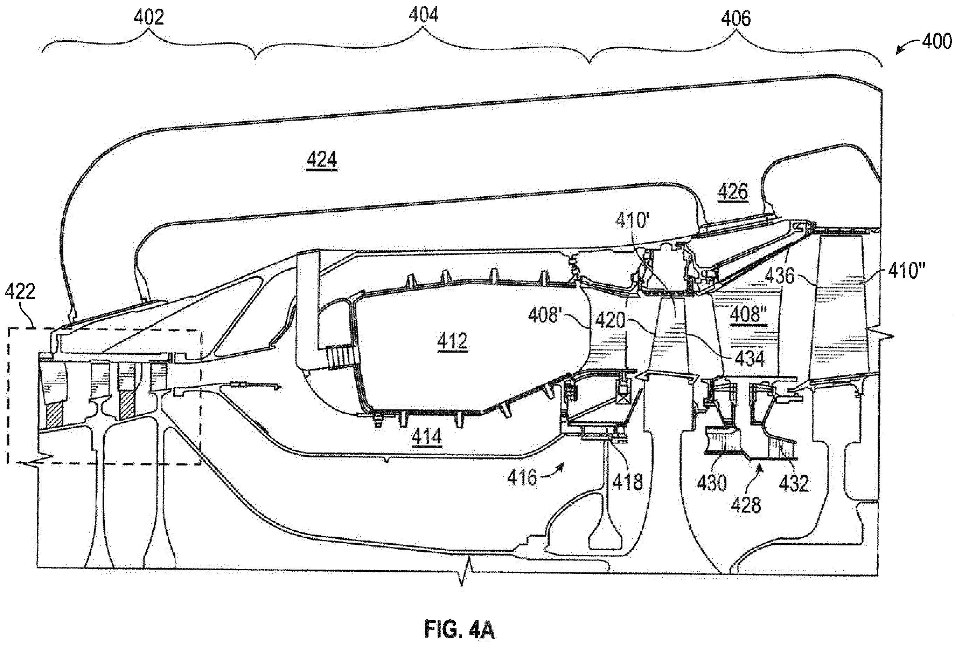

Turning now to FIGS. 4A-4B, schematic illustrations of a gas turbine engine 400 configured in accordance with an embodiment of the present disclosure are shown. The gas turbine engine 400 includes a compressor section 402, a combustor section 404, and a turbine section 406. The turbine section 406 includes a first vane 408' (part of a first stator section), a first blade 410' aft of the first vane 408' (part of a first rotating section), a second vane 408" after of the first blade 410' (part of a second stator section), and a second blade 410" aft of the second vane 408" (part of a second rotating section). The combustor section 404 is forward of the turbine section 406 and configured to supply hot air from a combustion chamber 412 toward the turbine section 406 to drive the blades 410', 410" to operation the engine 400. The compressor section 402 is driven by rotation of the blades 410', 410" (and the rotors to which the blades 410', 410" are attached) and thus generate compressed air which can be used for cooling purposes.

As shown, a high pressure source 414 of air is present around the combustion chamber 412 and air from the high pressure source 414 is fed into and through a primary TOBI assembly 416, which includes an aft-facing, forward-positioned TOBI 418. The primary TOBI assembly 416 supplies high pressure air through the aft-facing, forward-positioned TOBI 418 to cool a leading edge 420 of the first blade 410'. The high pressure cooling air is used to cool the leading edge 420 to account for the high temperature air that exits the combustion chamber 412. Further, the cooling air may be provided to account for high pressure gas path air, to maintain a positive backflow margin. Positive backflow or outflow margin enables cooling air to discharge from the airfoil which can also be used for film cooling. Due to the aerodynamic loading on the blade 410' and pressure sinks on the suction side and trailing edge are much lower, thus enabling the feed from a low pressure source, as described below.

However, as noted, the high pressure cooling air from the high pressure source 414 may not be necessary for cooling other portions of the first blade 410'. In the embodiment of FIGS. 4A-4B, a low pressure source 422 is provided from the compressor section 402 of the engine 400. Low pressure air can be bled from the compressor section 402 and routed to the turbine section 406 to provide cooling to other parts of the turbine section 406 (as compared to the leading edge 420 of the first blade 410'). For example, the low pressure air from the low pressure source 422 can be supplied through a bypass conduit 424, through a supply inlet 426, and to a secondary TOBI assembly 428. The secondary TOBI assembly 428 includes at least a forward-facing, aft-positioned TOBI 430 (such as shown in FIG. 3) and can include an optional secondary aft-facing, forward-positioned TOBI 432 which directs cooling air toward the second blade 410".

The air supplied from the low pressure source 422 is provided through the secondary TOBI assembly 428 and specifically the forward-facing, aft-positioned TOBI 430 to the first blade 410'. The cooling air provided through the forward-facing, aft-positioned TOBI 430 is directed to non-leading edge surfaces of the first blade 410', such as pressure and suction side surfaces and/or a trailing edge 434 of the first blade 410'. Air supplied from the low pressure source 422 is provided through the secondary TOBI assembly 428 and specifically the secondary aft-facing, forward-positioned TOBI 432 is supplied to a leading edge 436 of the second blade 410" as well as other surfaces of the second blade 410" (e.g., pressure side, suction side, trailing edge, etc.).

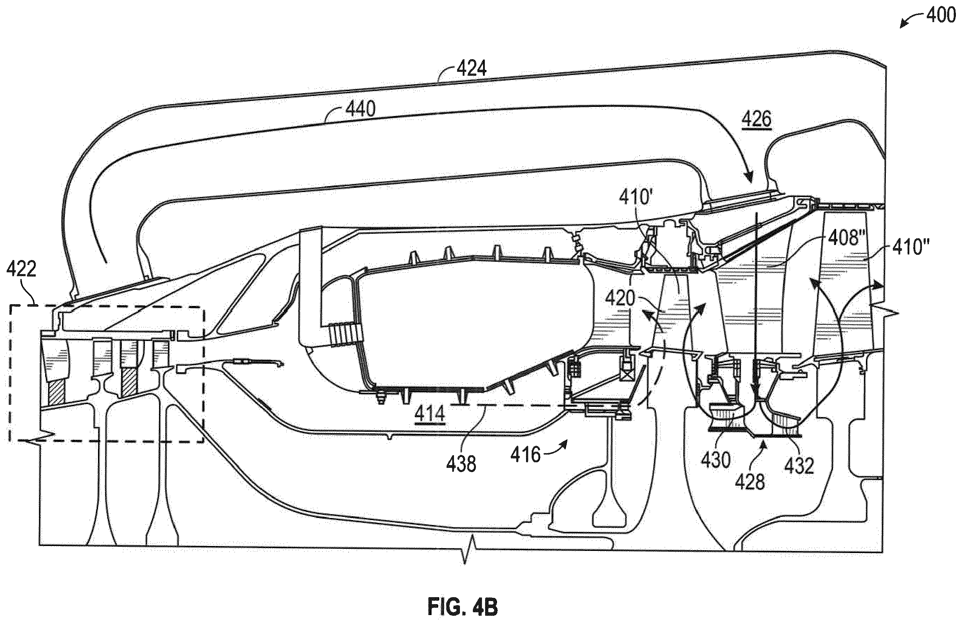

FIG. 4B illustrates an airflow within the engine 400 described in FIG. 4A. The illustration in FIG. 4B is identical to the illustration of FIG. 4A except the addition of arrows indicating cooling air flow through the engine 400. Various elements within FIG. 4B are not labeled to avoid clutter.

As shown, a high pressure cooling flow 438 from the high pressure source 414 will enter and pass through the primary TOBI assembly 416 and into the first blade 410' to provide cooling air at appropriate pressure to the leading edge 420 of the first blade 410'. Further, as shown, a low pressure cooling flow 440 is sourced from the low pressure source 422 and passes through the pass conduit 424, through a supply inlet 426, and into and through the second vane 408". The low pressure cooling flow 440 will then enter the secondary TOBI assembly 428. As shown, a portion of the low pressure cooling flow 440 is directed forward through the forward-facing, aft-positioned TOBI 430 and into and through the first blade 410'. Another portion of the low pressure cooling flow 440 is directed aftward through the secondary aft-facing, forward-positioned TOBI 432 and into and through the second blade 410".

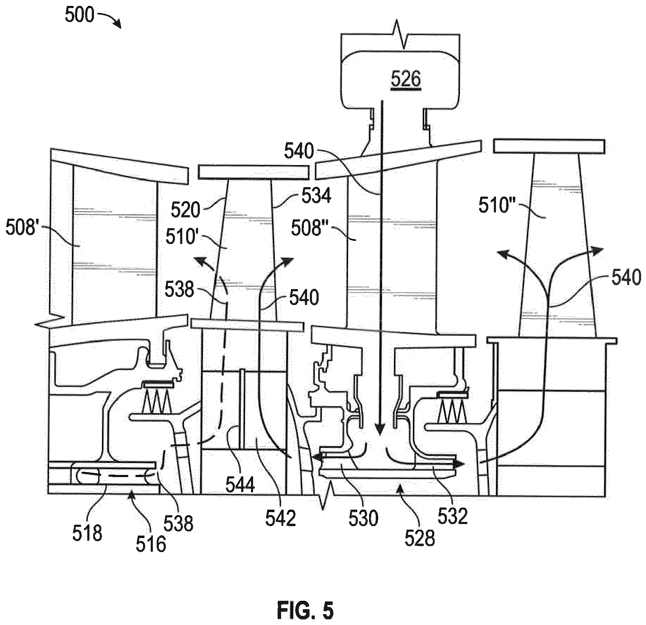

Turning now to FIG. 5, a schematic illustration of flow through an engine 500 having a secondary TOBI assembly 528 in accordance with an embodiment of the present disclosure is shown. The engine 500 includes a plurality of vanes 508', 508" that are part of stator sections (e.g., as shown in FIG. 3) and blades 510', 510" that are part of rotating sections (e.g., as shown in FIG. 3). The blades 510', 510" rotate within the engine 500, as known in the art, and the vanes 508', 508" are stationary relative thereto. The engine 500 further includes a primary TOBI assembly 516 and a secondary TOBI assembly 528. The primary TOBI assembly 516 includes an aft-facing, forward-positioned TOBI 518 that is configured to supply high pressure cooling flow 538 to a leading edge 520 of a first blade 510' of a turbine section of the engine 500.

The secondary TOBI assembly 528 is arranged to supply low pressure cooling flow 540 to portions of the first blade 510' that are not the leading edge 520 and to a second blade 510". For example, as schematically shown, the low pressure cooling flow 540 is provided through a forward-facing, aft-positioned TOBI 530 to a trailing edge 534 of the first blade 510'. Further, as shown, an aft-facing, forward-positioned TOBI 532 of the secondary TOBI assembly 528 is arranged to direct a portion of the low pressure cooling flow 540 to the second blade 510", and can cool a leading edge, body, and trailing edge of the second blade 510", as will be appreciated by those of skill in the art. The low pressure cooling flow 540 flows through a supply inlet 526 that feeds the low pressure cooling flow 540 into and through an interior of a second vane 508".

Once the low pressure cooling flow 540 exits the second vane 508", the low pressure cooling flow 540 enters the secondary TOBI assembly 528 and a portion of the flow enters the forward-facing, aft-positioned TOBI 530 and is directed toward a first disc 542 that supports and drives the first blade 510'. As shown, the first disc 542 includes a flow divider 544 that is configured to prevent mixing of the high pressure cooling flow 538 and the low pressure cooling flow 540 as the two flows enter the first disc 542 and/or is arranged to direct the high pressure cooling flow 538 and the low pressure cooling flow 540 to desired locations and/or channels within the first blade 510'.

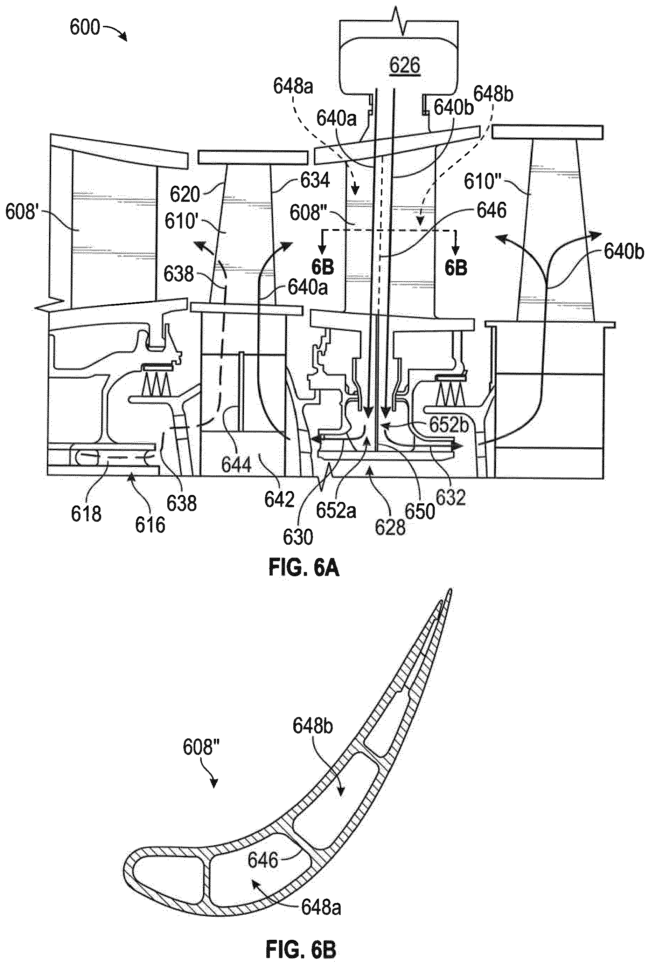

Turning now to FIGS. 6A-6B, schematic illustrations of flow through an engine 600 having a secondary TOBI assembly 628 in accordance with another embodiment of the present disclosure is shown. The engine 600 includes a plurality of vanes 608', 608" and blades 610', 610". The blades 610', 610" rotate on a disc 642 within the engine 600, as known in the art, and the vanes 608', 608" are stationary relative thereto. The engine 600 further includes a primary TOBI assembly 616 and a secondary TOBI assembly 628. The primary TOBI assembly 616 includes an aft-facing, forward-positioned TOBI 618 that is configured to supply high pressure cooling flow 638 to a leading edge 620 of a first blade 610' of a turbine section of the engine 600. FIG. 6B is a schematic illustration of a cross-section of the vane 608" as viewed along the line 6B-6B shown in FIG. 6A.

The secondary TOBI assembly 628 is arranged to supply low pressure cooling flow 640a, 640b to portions of the first blade 610' that are not the leading edge 620 (first portion 640a) and to a second blade 610" (second portion 640b). For example, as schematically shown, a first portion of the low pressure cooling flow 640a is provided through a forward-facing, aft-positioned TOBI 630 to a trailing edge 634 of the first blade 610'. Further, as shown, an aft-facing, forward-positioned TOBI 632 of the secondary TOBI assembly 628 is arranged to direct a second portion of the low pressure cooling flow 640b to the second blade 610", and can cool a leading edge, body, and trailing edge of the second blade 610", as will be appreciated by those of skill in the art. The low pressure cooling flows 640a, 640b flows through a supply inlet 626 that feeds the low pressure cooling flows 640a, 640b into and through an interior of a second vane 608".

As schematically shown, the second vane 608" is divided by a vane flow divider 646 that divides the interior of the second vane 608", or a portion of the interior, into a first vane feed cavity 648a and a second vane feed cavity 648b. The first and second vane feed cavities 648a, 648b are fluid passages or openings that enable fluid flow through the second vane 608" between the inner and outer diameter of the second vane 608" (e.g., the inner diameter 106 and the outer diameter 108 of the vane 102a shown in FIG. 1B). Such separation of the low pressure cooling flow 640a, 640b allows for improved control of pressure, flow, RPMF, etc. of the airflow that is supplied to the first blade 610' and the second blade 610". In such embodiments, the forward-facing, aft-positioned TOBI 630 can include airfoils that are predefined and arranged to supply a predetermined and/or desired pressure, flow, RPMF, etc. low pressure cooling flow 640a to the first blade 610'. Similarly, the aft-facing, forward-positioned TOBI 632 can include airfoils that are predefined and arranged to supply a predetermined and/or desired pressure, flow, RPMF, etc. low pressure cooling flow 640b to the second blade 610".

As schematically shown, in addition to the vane flow divider 646, the secondary TOBI assembly 628 can include a secondary TOBI divider 650 which separates the low pressure cooling flow 640a, 640b as it enters and flows through the secondary TOBI assembly 628. In some embodiments the vane flow divider 646 can be omitted and the secondary TOBI divider 650 can provide the separating functionality within the secondary TOBI assembly 628.

In operation, once the low pressure cooling flow 640a, 640b exits the second vane 608" (with or without the vane flow divider 646), the low pressure cooling flow 640a, 640b enters a first TOBI assembly cavity 652a and a second TOBI assembly cavity 652b of the secondary TOBI assembly 628. Air within the first TOBI assembly cavity 652a is a first portion of the low pressure cooling flow 640a and air within the second TOBI assembly cavity 652b is a second portion of the low pressure cooling flow 640b. The first portion of the low pressure cooling flow 640a enters the forward-facing, aft-positioned TOBI 530 from the first TOBI assembly cavity 652a and is directed toward a first disc 642 that supports and drives the first blade 610'. Similar to that described above, the first disc 642 includes a flow divider 644 that is configured to prevent mixing of the high pressure cooling flow 638 and the low pressure cooling flow 640a as the two flows enter the first disc 642 and/or is arranged to direct the high pressure cooling flow 638 and the low pressure cooling flow 640a to desired locations and/or channels within the first blade 610'.

As shown in FIG. 6B, the interior of the vane 608" is divided into the first vane feed cavity 648a and the second vane feed cavity 648b, with the vane flow divider 646 located therebetween. The first and second vane feed cavities 648a, 648b can be used for convective cooling, i.e., flow directly through the vane 608" in a radial pass to the secondary TOBI assembly 628. However, in some embodiments, the airflow within the first and second vane feed cavities 648a, 648b can be used for vane film and/or purge flow.

Although described above with a configuration that likely would provide flow reaching the first and second TOBI assembly cavities 652a, 652b from the low pressure source 626 can be of the same pressure/temperature, such condition is not required. For example, in some embodiments, the flow reaching the first and second TOBI assembly cavities 652a, 652b may be different. In such embodiments/configurations, for example, pressure and/or flow could be controlled thru respective first and second vane feed cavities 648a, 648b as needed for the vane 608 and/or downstream blades 610. Alternatively, pressure and/or flow could be controlled upstream of first and second vane feed cavities 648a, 648b, e.g. the low pressure source 626 could be partitioned from different sources from the low pressure compressor and/or a combination of high and low pressure sources 414, 422 (traveling outboard of the combustor).

The use of the terms "a," "an," "the," and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other. It should be appreciated that relative positional terms such as "forward," "aft," "upper," "lower," "above," "below," and the like are with reference to normal operational attitude and should not be considered otherwise limiting.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the spirit and scope of the present disclosure. Additionally, while various embodiments of the present disclosure have been described, it is to be understood that aspects of the present disclosure may include only some of the described embodiments.

For example, although shown as a single stator section/rotating section pair in FIG. 3, those of skill in the art will appreciate that embodiments of the present disclosure can be applied repeatedly within a turbine section of a gas turbine engine such that each stator section/rotating section pair within the turbine includes an aft-positioned, forward facing TOBI (whether alone or in combination with another TOBI). Further, although shown in FIGS. 4-6 with a secondary TOBI assembly having two TOBIs, in various embodiments the secondary TOBI assembly can include only one TOBI, e.g., a forward-facing, aft-positioned TOBI, such as that shown in FIG. 3. A subsequent blade (e.g., second blade) can be cooled by a second forward-facing, aft-positioned TOBI (e.g., located relative to a third vane that is aft of the second blade).

Accordingly, the present disclosure is not to be seen as limited by the foregoing description, but is only limited by the scope of the appended claims.

## Claims

1. A turbine comprising:
a first stator section having a plurality of first vanes (408'; 508'; 608');
a first rotating section having a plurality of first blades (410'; 510'; 610'), the first rotating section being axially adjacent and aft of the first stator section along an axis of the turbine;
a second stator section having a plurality of second vanes (408"; 508"; 608") being axially adjacent the first rotating section and aft of the first rotating section along the axis of the turbine;
a primary tangential onboard injector assembly ("primary TOBI assembly") (416; 516; 616) having an aft-facing, forward-positioned tangential onboard injector ("aft-facing, forward-positioned TOBI") (418; 518; 618) located radially inward from the first vanes (408'; 508'; 608') of the first stator section and configured to direct an airflow (438; 538; 638) from the first stator section in an aftward direction toward the first rotating section, the primary TOBI assembly (416; 516; 616) supplying high pressure cooling flow (438; 538; 638) to leading edges of the first blades (410'; 510'; 610') of the first rotating section; and
a secondary tangential onboard injector assembly ("secondary TOBI assembly") (428; 528; 628) having a forward-facing, aft-positioned tangential onboard injector ("forward-facing, aft-positioned TOBI") (430; 530; 630) located radially inward from the second vanes (408"; 508"; 608") of the second stator section and configured to direct an airflow (440; 540; 640a) from the second stator section in a forward direction toward the first rotating section, the secondary TOBI assembly (428; 528; 628) supplying low pressure cooling flow (440; 540; 640a) to non-leading edge portions of the first blades (410'; 510'; 610') of the first rotating section.

2. The turbine of claim 1, further comprising:
a second rotating section having a plurality of second blades (410"; 510"; 610"), the second rotating section being axially adjacent and aft of the second stator section along the axis of the turbine,
wherein the secondary TOBI assembly (428; 528; 628) includes an aft-facing, forward-positioned TOBI (432; 532; 632) located radially inward from the second vanes (408"; 508"; 608") of the second stator section and configured to direct an airflow (440; 540; 640b) from the second stator section in an aftward direction toward the second rotating section, the secondary TOBI assembly (428; 528; 628) supplying low pressure cooling flow (440; 540; 640b) to leading and non-leading edge portions of the second blades (410"; 510"; 610") of the second rotating section.

3. The turbine of claim 2, wherein the secondary TOBI assembly (628) includes a secondary TOBI divider (650) to separate the low pressure cooling flow into a first TOBI assembly cavity (652a) and a second TOBI assembly cavity (652b), wherein flow from the first TOBI assembly cavity (652a) passes through the forward-facing, aft-positioned TOBI (630) and flow from the second TOBI assembly cavity (652b) passes through the aft-facing, forward-positioned TOBI (632).

4. The turbine of any preceding claim, further comprising:
a high pressure source (414) fluidly connected to the primary TOBI assembly (416; 516; 616); and
a low pressure source (422; 526; 626) fluidly connected to the secondary TOBI assembly (428; 528; 628).

5. The turbine of claim 4, wherein the high pressure source (414) is a cavity surrounding a combustion chamber (412) of the gas turbine engine.

6. The turbine of claim 4 or 5, wherein the low pressure source (422; 526; 626) is a compressor section of the gas turbine engine.

7. The turbine of claim 4, wherein fluid from the low pressure source (422; 526; 626) passes through at least one of the plurality of second vanes (408"; 508"; 608") of the first stator section to reach the secondary TOBI assembly (428; 528; 628).

8. The turbine of any preceding claim, wherein the first rotating section includes a first disc (542; 642) and the first blades (410'; 510'; 610') rotate on the disc, wherein a portion of the first disc receives at least a portion of the high pressure cooling flow (438; 538; 638) from the primary TOBI assembly (416; 516; 616) and at least a portion of the low pressure cooling flow (440; 540; 640a) from the secondary TOBI assembly (428; 528; 628).

9. The turbine of claim 8, wherein the first disc (542; 642) includes a flow divider (544; 644) to prevent mixing of the high pressure cooling flow (538; 638) and the low pressure cooling flow (540; 640a) prior to entering the first blades (510'; 610').

10. A gas turbine engine (400; 500; 600) having a turbine as claimed in any preceding claim.

11. A gas turbine engine (400; 500; 600) having a turbine comprising:
a rotating section (303) having a plurality of blades (302b; 410'; 510'; 610') rotatable on a disc (326; 542; 642);
a stator section (301) having a plurality of vanes (302a; 408"; 508"; 608") being axially adjacent the rotating section (303) and aft of the rotating section along an axis of the gas turbine engine; and
a forward-facing, aft-positioned tangential onboard injector ("forward-facing, aft-positioned TOBI") (328; 430; 530; 630) located radially inward from the vanes (302a; 408"; 508"; 608") of the stator section (301) and configured to direct an airflow (310; 440; 540; 640a) from the stator section in a forward direction toward the rotating section, the forward-facing, aft-positioned TOBI (328; 430; 530; 630) supplying low pressure cooling flow to non-leading edge portions of the blades (302b; 410'; 510'; 610') of the rotating section.
